# EUROPEAN PATENT APPLICATION

(11) **EP 3 567 534 A1**
(43) Date of publication of application: **13.11.2019**
(21) Application number: 17889771.6
(22) Date of filing: 25.12.2017
(51) Int. Cl.: G06Q 20/32, G06Q 20/40

(54) **SCAN AND PAY METHOD AND DEVICE UTILIZED IN MOBILE APPARATUS**

(30) Priority: 03.01.2017 CN 201710001426
(71) Applicant: Alibaba Group Holding Limited, Grand Cayman (KY)
(72) Inventor: LU, Yicheng, Hangzhou, Zhejiang 311121 (CN); CHEN, Shuai, Hangzhou, Zhejiang 311121 (CN); CHEN, Tao, Hangzhou, Zhejiang 311121 (CN); XIA, Jupeng, Hangzhou, Zhejiang 311121 (CN); WANG, Ning, Hangzhou, Zhejiang 311121 (CN)
(74) Representative: Branderhorst, Matthijs Pieter Arie
(86) International application number: PCT/CN2017/118277
(87) International publication number: WO 2018/126924

(57) **Abstract**

The present application discloses a scan-and-pay method and related devices utilized in a mobile device. The scan-and-pay method comprises: receiving a payment request of an operator of the mobile device; and generating a payment code based on the payment request, wherein the payment code at least comprises the following information: first information associated with a payment account and second information associated with a behavioral biometric signature of the operator and a historical records of behavioral biometric signature in the mobile device. The payment method in the present application can be utilized to improve risk identification capability, reduce risk control and analysis cost, and reduce resource consumption caused by risk control and identification, thereby provides an enhanced user experience.

## Description

### Technical Field

The present application relates to the field of Internet technologies, and in particular, to a scan-and-pay method and device utilized in a mobile device.

### Background

Offline scan-and-pay has gradually become a mainstream payment method. At present, a typical offline scan-and-pay flow comprises: generating a payment code on a client in response to a user payment request; a merchant reading information in the payment code on the client using a scanning device and uploading the information to a server via the merchant's network; the server performing risk control scanning, if there is a risk, requesting the user to go online for further verification, and if there is no risk according to the scan, then notifying the merchant and the user that the transaction is approved.

Such payment method needs to have three features: first, the payment speed needs to be fast so as to ensure satisfying user experience, and then a typical goal is to minimize the payment time. Second, the data to be transmitted is small. Since a mobile device will be frequently in an environment with no network when a user uses the mobile device for payment, the mobile device can transmit only a small amount of data. For example, the mobile device transmits a barcode generated by a client to a merchant scanning device to achieve data transmission. However, the limited amount of data can be transmitted presents a challenge to subsequent risk control. Third, each payment needs real-time risk control to improve the security of payment.

Therefore, the offline payment method according to the current technologies has the problem that the time used by risk control conflicts with user experience, and the invocation and calculation of risk control by the server consumes a large quantity of server resources every time, which further leads to poor user experience with the offline payment.

### Summary

In view of the above, embodiments of the present application provide a scan-and-pay method and device utilized in a mobile device to solve the problem in the offline payment method according to the current technologies that risk control takes a lot of time and consumes a large quantity of server resources.

The embodiments of the present application provide a scan-and-pay method utilized in a mobile device, the method comprising:
receiving a payment request of an operator of the mobile device; and
generating a payment code based on the payment request, wherein the payment code at least comprises the following information:
   first information associated with a payment account and second information associated with a behavioral biometric signature of the operator and a historical behavioral biometric signature recorded in the mobile device.

The present application further provides a scan-and-pay device utilized in a mobile device, the device comprising:
a receiving unit for receiving a payment request of an operator of the mobile device; and
a generating unit for generating a payment code based on the payment request, wherein the payment code at least comprises the following information: first information associated with a payment account and second information associated with a behavioral biometric signature of the operator and a historical behavioral biometric signature recorded in the mobile device.

The present application further provides a risk control method utilized for performing scan-and-pay in a mobile device, the method comprising:
obtaining a payment code provided by the mobile device, wherein the payment code at least comprises the following information: first information associated with a payment account and second information associated with a behavioral biometric signature of an operator of the mobile device and a historical behavioral biometric signature recorded in the mobile device; and
determining whether to activate risk control identification of a server based on the second information comprised in the payment code.

The present application further provides a risk control device utilized for performing scan-and-pay in a mobile device, the device comprising:
an obtaining unit for obtaining a payment code provided by the mobile device, wherein the payment code at least comprises the following information: first information associated with a payment account and second information associated with a behavioral biometric signature of an operator of the mobile device and a historical behavioral biometric signature recorded in the mobile device; and
a risk control processing unit for determining whether to activate risk control identification of a server based on the second information comprised in the payment code.

The above-described solutions according to the present application can achieve the following technical effects:
First, an enhanced capability of risk control identification. Relative to conventional payment risk control, the technical solutions according to the present application transmit identification results based on behavioral biological information of an operator to a server via a payment code for risk control determination, which enables the entire risk control system to accurately determine risk using data in more dimensions, thereby improving the accuracy of risk control.
Second, reduced risk control analysis cost. Relative to conventional risk control at a server, in the technical solutions according to the present application, a terminal device performs risk control identification based on behavioral biological information of an operator, making it unnecessary for risk control operations at a server for a transaction request when it is determined that the operation is by the same person, thereby greatly reducing the consumption of server resources.
Third, reduced time for risk control. The terminal device performs risk control identification based on behavioral biological information of an operator, making it unnecessary for risk control operations at a server for a transaction request when it is determined that the operation is by the same person. Moreover, computation conducted during this process relies on the terminal device. Therefore, relative to conventional risk control at a server, the time used for risk control for this part of transaction is greatly reduced.
Fourth, improved risk control efficiency.

### Brief Description of the Drawings

To more clearly describe the technical solutions of the embodiments of the present application or the current technologies, the accompanying drawings to be used in the embodiments or the current technologies will be briefly described below. It is obvious that the accompanying drawings in the description below are merely some embodiments in the present application. Based on these accompanying drawings, other relevant drawings are obtainable by one of ordinary skill in the art without creative effort.
FIG. 1 is a flow chart of a scan-and-pay method for a mobile device according to some embodiments of the present application;
FIG. 2 is a flow chart of a risk control method for performing scan-and-pay in a mobile device according to some embodiments of the present application;
FIG. 3 is a flow chart of a risk control method for performing scan-and-pay in a mobile device according to some embodiments of the present application;
FIG. 4 is a schematic structural diagram of a scan-and-pay device on a mobile device according to some embodiments of the present application;
FIG. 5 is a schematic structural diagram of a risk control device for performing scan-and-pay in a mobile device according to some embodiments of the present application.

### Detailed Description

Applications of biometrics in the payment field are increasingly extensive. Each biological individual has unique physiological characteristics or behavioral characteristics that can be measured or automatically identified and verified, i.e., biometrics, which may be divided into physiological biometric signatures (e.g., eye characteristics, sound print, fingerprint, palm print, heartbeat, pulse, chromosome, DNA, bite mark, etc., wherein the eye characteristics may comprise biometrics such as eyeprint, iris, sclera, etc.) and behavioral biometric signatures (e.g., gait, sound, handwriting, keystroke, key pressing force, posture to hold an electronic device, browsing log characteristics, RPC (Remote Procedure Call Protocol) request record characteristics, etc.). Biometric identification identifies an individual based on the unique biometrics of the individual to complete identity verification.

Because the features of biometrics are simple, rapid, safe, reliable, and accurate in identity verification, there is a trend to apply biometrics in the field of payment security. However, how to utilize behavioral biometric signatures to improve risk control efficiency has not been addressed.

To achieve the objects of the present application, embodiments of the present application provide a scan-and-pay method and device utilized in a mobile device for receiving a payment request of an operator of the mobile device; and generating a payment code based on the payment request, wherein the payment code at least comprises first information associated with a payment account and second information associated with a behavioral biometric signature of the operator and a historical behavioral biometric signature recorded in the mobile device. This way, information related to the behavioral biometric signature of the operator and information related to the historical behavioral biometric signature recorded in the mobile device can be transmitted to the server via the payment code for risk control determination, which enables the entire risk control system to accurately determine risk using data in more dimensions, improve the accuracy of risk control, and thus improve the efficiency of risk control identification.

It should be noted that the behavioral biometric signature in the embodiments of the present application may comprise at least one of a RPC request record, a browsing log, a posture to hold a mobile device, and finger pressing characteristics.

To enable one of ordinary skill in the art to better understand the technical solutions of the present application, the technical solutions in the embodiments of the present application will be clearly and completely described below with reference to the accompanying drawings in the embodiments of the present application. It is obvious that the described embodiments are merely some, but not all, embodiments of the present application. Based on the embodiments of the present application, all other embodiments obtainable by one of ordinary skill in the art without creative effort shall fall within the scope of the present application.

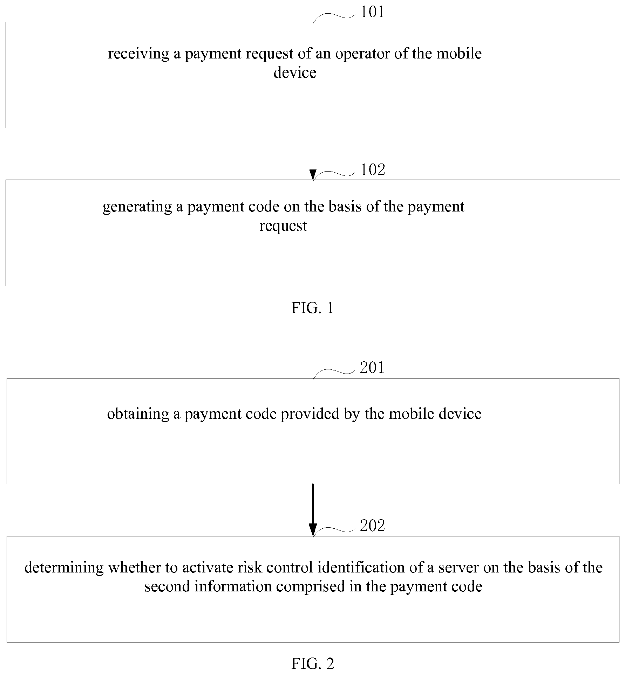

FIG. 1 is a flow chart of a scan-and-pay method utilized in a mobile device according to some embodiments of the present application. The method is described below.

Step 101: receiving a payment request of an operator of the mobile device.

For example, when the operator determines that a payment request needs to be initiated, the operator initiates the payment request by triggering a payment control or other payment-related page elements. At this moment, a client in the mobile device receives the payment request.

It should be noted that when the payment request is received, a series of behavioral biometric signatures of the operator before initiating the payment request needs to be determined. In the embodiments of the present application, the behavioral biometric signatures of the operator may be collected by a system or device capable of identifying behavioral biometric signatures of the operator of the mobile device that is installed on the mobile device, or may be obtained in other manners, which is not limited in the specification.

A system or device capable of identifying behavioral biometric signatures of the operator of the mobile device that is installed on the mobile device is used as an example in the specification.

Behavioral biometric signatures reflect, to a degree, behavioral habits of the operator, while some behavioral habits do not change in most circumstances. The system or device is capable of recording and monitoring, in real time, behavioral biometric signatures (BBS) of the operator generating in operating the mobile device. Namely, the identity of the operator may be recognized through the behavioral biometric signatures of the operator.

Take a user browsing log as an example, contents of websites or webpages browsed by a user in a continuous period of time reflect personal or professional preferences of the user, which do not change in most circumstances. If a behavioral biometric signature monitoring system or device on a mobile device finds, through monitoring the user's browsing log behavior, a significant change of the contents of websites or webpages browsed by the user in a recent period of time that indicates that the user has abnormal browsing log behaviors. At this point, it can be concluded that the user using the mobile device has changed, i.e., the user currently operating the mobile device is not the user who previously used the mobile device.

A detailed identification process is not the focus of the present application. In the embodiments of the present application, a behavioral biometric signature monitoring system or device is used to collect behavioral biometric signatures of an operator, and a risk identification system based on a mobile device is used to determine whether the operator is the owner of the mobile device and provide conflicting signatures for the purpose of risk control efficiency of a server. The conflicting signatures reflect differences between recent behavioral biometric signatures and behavioral biometric signatures in historical records, i.e., whether the operator is the owner of the mobile device can be evaluated in a comprehensive manner.

The operator of a mobile device typically performs other operations, such as browsing other pages, a swipe operation, etc., on the mobile device before initiating a payment request, and all these operations may be referred to as behavioral biometric signatures of the operator. Consequently, the behavioral biometric signature monitoring system or device on the mobile device collects, in real time, these behavioral biometric signatures when the operator performs other operations on the mobile device.

It should be noted that, after the behavioral biometric signature monitoring system or device collects these behavioral biometric signatures, the collected behavioral biometric signatures may be stored in a designated storage space. A library of behavioral biometric signatures may be maintained in the designated storage space, and behavioral biometric signatures of operators who operate the mobile device that are collected at various times are stored in the library of behavioral biometric signatures. Normally, behavioral biometric signatures stored in a designated storage space of a terminal device should be mostly behavioral biometric signatures of the owner of the mobile device; alternatively, depending on the size of the designated storage space, behavioral biometric signatures that are monitored recently (the "recently" here may refer to a set period of time, for example, behavioral biometric signatures monitored within the past week) may be stored, and historical behavioral biometric signatures collected previously (which may refer to behavioral biometric signatures monitored before the past week) may be sent to a server or stored in a hard disk of the terminal device, which is not limited in the specification.

It should be noted that a mapping relationship between collection time and collected behavioral biometric signatures is stored in the above-described library of behavioral biometric signatures.

Step 102: generating a payment code based on the payment request.

Here, the payment code at least comprises the following information: first information associated with a payment account and second information associated with a behavioral biometric signature of the operator and a historical behavioral biometric signature recorded in the mobile device.

In the embodiments of the present application, upon receipt of the payment request, the client generates a payment code based on the payment request.

In one example, first, based on the payment request, the following information is determined: the first information associated with a payment account and the second information associated with a behavioral biometric signature of the operator and a historical behavioral biometric signature recorded in the mobile device.

The first information here refers to information associated with a payment account, i.e., an account identifier, an account name, an account number, a payment account identifier, an device identifier of the mobile device, etc., which will not be elaborated in the specification.

The second information will be further described here, and the second information in the embodiments of the present application refers to information associated with a behavioral biometric signature of the operator and a historical behavioral biometric signature recorded in the mobile device. Before the second information is determined, behavioral biometric signatures collected in a set period of time before the payment request is received need to be determined.

In the embodiments of the present application, the client may determine a set time range according to the time when the payment request is received. Based on the set time range, the client searches for behavioral biometric signatures collected in the set time range in the designated storage space of the mobile device, i.e., obtains the behavioral biometric signatures of the operator that were generated before the payment request is initiated.

After the behavioral biometric signatures are obtained, the second information may be obtained based on the behavioral biometric signatures. It should be noted that the information comprised in the second information in the embodiments of the present application may be referred to as conflict signature information, and the conflict signature information may be obtained through calculation by a risk identification module in the terminal device. Then, when the server obtains the payment code, the server may directly perform risk identification according to the second information comprised in the payment code, which effectively reduces the consumption of server resources during risk identification and improves the efficiency for the entire risk identification.

The second information in the embodiments of the present application may be determined in several manners below:

### First manner:

after the behavioral biometric signatures of the operator that were generated before the payment request is initiated are obtained, a comparison operation may be executed based on an obtained behavioral biometric signature of the operator and a historical behavioral biometric signature recorded in the mobile device to determine whether the operator is the owner of the mobile device.

In one example, a signature similarity between the obtained behavioral biometric signature of the operator and the historical behavioral biometric signature recorded in the mobile device is calculated, and whether the operator is the owner of the mobile device is determined according to the signature similarity.

If the signature similarity is greater than a set threshold, it indicates that the operator is the owner of the mobile device; if the signature similarity is not greater than a set threshold, it indicates that the operator is not the owner of the mobile device.

The second information may be obtained based on the determination result of whether the operator is the owner of the mobile device, i.e., the second information comprises the determination result of whether the operator is the owner of the mobile device, wherein the determination result is either that the operator is the owner of the mobile device or that the operator is not the owner of the mobile device.

### Second manner:

The second information in the embodiments of the present application may also be obtained in a manner of a combination of different information, i.e., on one hand, comprising the determination result of whether the operator is the owner of the mobile device; and on the other hand, comprising a determination result of whether the collected behavioral biometric signatures are abnormal based on the collected behavioral biometric signature and historical behavioral signature. With such information combination, whether the operator is the owner of the mobile device can be accurately identified.

For example, in addition to the determination result of whether the operator is the owner of the mobile device, the second information further comprises a determination result of whether the collected behavioral biometric signature is abnormal, such as a determination result of whether the RPC request record is abnormal, a determination result of whether the browsing log is abnormal, etc.

If the determination result of whether the operator is the owner of the mobile device is expressed simply by "yes" or "no," the mobile device then needs to perform massive computation to obtain an accurate result of determination, which means that the mobile device needs to consume a lot of resources. To make the result of determination output by the mobile device to be relatively accurate, the manner of a combination of different information may be used in the embodiments of the present application, i.e., the probability that the operator is the owner of the mobile device is calculated, which is then combined with other determination results, the accuracy of a result of determination can be ensured, and moreover, the resources consumed by the mobile device can be reduced.

For example, the probability that the operator is the owner of the mobile device is lower than a set threshold, and according to the first manner, it indicates that the operator is not the owner of the mobile device. By considering determination results from other information, this result may be corrected, and then the subsequent operations by the server may also be impacted.

This way, when the server receives the payment code, the server no longer identifies whether the operator is the owner of the mobile device by only relying on one result of determination in the first manner, but through mutual corroboration among various information, which can help improve the efficiency and accuracy of risk identification.

It should be noted that, if the probability that the operator is the owner of the mobile device as determined by the mobile device in the first manner is unable to accurately determine whether the operator is the owner of the mobile device, the second information may be determined in the second manner when the payment code is generated, which can ensure the accuracy of determining whether the operator is the owner of the mobile device.

Second, a payment code is generated based on the determined first information and second information.

In one example, the obtained first information and second information are coded to obtain the payment code.

For the above-described first manner, since the second information comprises the determination result, it can be assumed that an identifier value corresponding to the determination result being that the operator is the owner of the mobile device is 1, and the identifier value corresponding to the determination result being that the operator is not the owner of the mobile device is 0. The payment code can be obtained through encoding using the first information and the determined identifier value.

This way, if the identifier value comprised in the obtained payment code is 0, the server determines that the operator is not the owner of the mobile device; if the identifier value comprised in the obtained payment code is 1, the server determines that the operator is the owner of the mobile device. As a result, the server does not need to perform massive computation and can complete identity recognition of the operator just based on the second information comprised in the obtained payment code, thereby achieving risk identification on the payment request.

For the above-described second manner, since the second information comprises a combination of different information, the second information needs to be converted first during encoding to obtain the identifier value corresponding to the second information.

How to convert the second information will be described below using an example where the second information comprises three types of information, i.e., a determination result of whether the operator is the owner of the mobile device, a determination result of whether the RPC request records are abnormal, and a determination result of whether the browsing log is abnormal.

Assuming that these three types of information correspond to a three-digit binary number [X][Y][Z], wherein X corresponds to the determination result of whether the operator is the owner of the mobile device, i.e., the value of X is xl if the determination result is that the operator is the owner of the mobile device, and the value of X is x2 if the determination result is that the operator is not the owner of the mobile device;

Y corresponds to the determination result of whether the browsing log is abnormal, i.e., the value of Y is y1 if the determination result is normal, and the value of Y is y2 if the determination result is abnormal; and

Z corresponds to the determination result of whether the RPC request records are abnormal, i.e., the value of Z is z1 if the determination result is normal, and the value of Z is z2 if the determination result is abnormal.

The mobile device can obtain a binary code according to determination results of different information. The binary code may be referred to as an identifier value corresponding to the second information; furthermore, the binary code may also be converted to a decimal number, and then the decimal number is an identifier value corresponding to the second information.

To ensure that the payment code is unique and secure, the identifier value corresponding to the second information may be determined in a random manner. For example, a number is randomly selected from 10 numbers of 0 to 9, and based on a mapping relationship between this number and [X][Y][Z], the values of xl, x2, y1, y2, z1, and z2 may be determined.
In one example, during the number selection, 1 to 2 numbers may be randomly selected from the 10 numbers of 0 to 9, i.e., the selected 1 to 2 numbers are used as redundant values to control an increase of encoding noise, causing the encoding solution not to be easily cracked. In other words, the numbers as redundant values cannot be selected as a number for establishing a mapping relationship with [X][Y][Z].

[X][Y][Z] is typically a binary number, and then the value range of this binary number is 0 to 7. Information having three dimensions may be combined in a total of eight combination manners, and eight numbers are selected from the 10 numbers of 0 to 9 and assigned to each combination manner.

For example, in the above-described binary encoding manner, it is determined that the operations are by the owner, the RPC records are normal, and the browsing log is normal, the binary result is [1][0][0], and the result of conversion to a decimal number is 4. Correspondingly, if the digit for storing behavioral biometric signatures during decoding is 4, it represents that "it is determined that the operations are by the owner, the RPC records are normal, and the browsing log is normal."

It should be understood that the combination meaning represented by each number during encoding may be changed. For example, in the above-described implementation manner, the number 4 represents that "it is determined that the operations are by the owner, the RPC records are normal, and the browsing log is normal," and it is feasible that any other number from 0 to 9 may replace the number 4 to represents the above-described meaning. In other words, a mapping relationship just needs to be established between various possible combinations of the above-described three determinations and all possible values. In addition, redundant values as encoding noise may also be changed. At the same time, regular or irregular changes to the meaning of numbers in the encoding solution and the composition of redundant values may both further enhance the difficulty in cracking the code. It should also be understood by one of ordinary skill in the art that the behavioral biometric signatures listed in the present implementation manner are merely preferred examples, while all behavioral biometric signatures that can be collected on a mobile device may all be used as reference for determining whether the operations are by the owner. Some implementation manners that are not illustrated further comprise a step of determining whether to initiate risk control at a server based on information related to the behavioral biometric signatures.

To ensure that the payment code is unique and secure, the mapping relationship between identifier values and second information may be at least partially changed regularly or periodically. Alternatively, before the payment code is generated based on the payment request, the mapping relationship between identifier values and second information is adjusted by changing at least one of the redundant values. This way, the security of the payment code is ensured.

In some other embodiments of the present application, the method further comprising:
if the determination result is that the probability that the operator is the owner of the mobile device is lower than a set threshold and it is determined that the mobile device is in an offline payment state, triggering an online identity check on the operator of the mobile device.

In one example, when the mobile device determines whether the operator is the owner of the mobile device, the mobile device may calculate a probability that the operator is the owner of the mobile device. If the probability is lower than a set threshold, it indicates that it is highly possible that the operator is not the owner of the mobile device, which also means the presence of high risk. Moreover, if the mobile device is in the offline payment state at this moment, the operator may then be prompted by a prompt message to activate online identity check on the operator of the mobile device. Namely, the operator is required to initiate an online payment request and perform online identity verification.

The scan-and-pay in the present application means, for example, a process that a payment code is generated on the mobile device, and a merchant reads information in the payment code using a scanning device and sends the information to the server to complete the payment.

According to the above-described content, a payment code is generated on the mobile device for a merchant to scan and thus complete the further payment procedure. With the payment method according to the present application, determination results based on user behavioral biometric signatures are encoded into the payment code, which is essentially an auxiliary offline risk control method. This type of offline auxiliary risk control can greatly reduce the risk control scan burden on the server, save resources at the server, and reduce the overall time for risk control.

According to the scan-and-pay method in the present application, a payment request of an operator of the mobile device is received; and a payment code is generated based on the payment request, wherein the payment code at least comprises first information associated with a payment account and second information associated with a behavioral biometric signature of the operator and a historical behavioral biometric signature recorded in the mobile device. This way, an identification result based on behavioral biometric information of the operator is transmitted to the server via the payment code for risk control determination, which enables the entire risk control system to accurately determine risk using data in more dimensions, improve the accuracy of risk control, and thus improve the efficiency of risk control identification.

It should be noted that an application of the scan-and-pay method according to the embodiments of the present application in offline payment performs identification by a terminal device based on behavioral biometric signatures, which not only ensures the security of offline payment, but also can reduce the cost of risk control at the server and improve the efficiency of offline payment risk control.

FIG. 2 is a flow chart of a risk control method utilized for performing scan-and-pay in a mobile device according to some embodiments of the present application. An execution entity in the embodiments of the present application may be a scanner or a server. If it is a server, the server is different from the server for performing risk identification. The method is described below.

Step 201: obtaining a payment code provided by the mobile device.

Here, the payment code at least comprises the following information: first information associated with a payment account and second information associated with a behavioral biometric signature of an operator of the mobile device and a historical behavioral biometric signature recorded in the mobile device.

In the embodiments of the present application, the manner of obtaining the payment code provided by the mobile device may be using a scan gun of a merchant to scan a payment code provided by the mobile device, or using a payment code identification device to receive a payment code provided by the mobile device, which is not limited in the specification.

For example, a 2D barcode image provided by the mobile device is scanned; and
the first information associated with a payment account and second information associated with the behavioral biometric signature of the operator of the mobile device and the historical behavioral biometric signature recorded in the mobile device comprised in the payment code are extracted from the 2D barcode image.

Namely, when the payment code provided by the mobile device is scanned, the information comprised in the payment code can be extracted.

Step 202: determining whether to send a risk control request to a server based on the second information comprised in the payment code.

In the embodiments of the present application, a decoding operation is performed on the payment code to obtain the second information comprised in the payment code.

If the second information only comprises the determination result of whether the operator is the owner of the mobile device, then a risk control request is triggered to be sent to the server if the determination result comprised in the second information is that the operator is not the owner of the mobile device.

If the determination result comprised in the second information is that the operator is the owner of the mobile device, then a response to the payment request is triggered.

If the second information comprises a combination of determination results regarding different information, then the probability that the operator is the owner of the mobile device is determined through the combination of determination results regarding different information.

For example, the probability that the operator is the owner of the mobile device is determined through a probability of determining whether the operator is the owner of the mobile device, a determination result of whether the browsing log is abnormal, and a determination result of whether the RPC request records are abnormal. In this case, if the probability that the operator is the owner of the mobile device is lower than a set threshold, it can be determined that the probability that the operator is the owner of the mobile device is lower than a second threshold when the browsing log is determined to be abnormal and/or the RPC request records are determined to be abnormal, and it can be determined that the probability that the operator is the owner of the mobile device is lower than a second threshold but higher than a first threshold when the browsing log is determined to be normal and the RPC request records are determined to be normal;
if the probability that the operator is the owner of the mobile device is higher than the set threshold, it can be determined that the probability that the operator is the owner of the mobile device is not higher than the first threshold and is higher than the second threshold when the browsing log is determined to be abnormal and/or the RPC request records are determined to be abnormal; and
when the browsing log is determined to be normal and the RPC request records are determined to be normal, it can be determined that the probability that the operator is the owner of the mobile device is higher than the first threshold.

The following operations are executed for the determination result:
if the probability is higher than the first threshold, triggering a response to the payment request;
if the probability is lower than the second threshold, indicating that the operator is not the owner of the mobile device, and sending a risk identification request to a risk control identification system of the server to activate a risk control identification operation of the server; if the probability is not higher than the first threshold and is higher than the second threshold, indicating that there is a risk that the operator is the owner of the mobile device, and sending identity verification information to a scanning device to ensure the security of the transaction, i.e., requiring the user using the scanning device to perform offline verification on the identity of the operator (e.g., presenting an I.D., providing certification information capable of proving that the operator is the owner of the mobile device, etc.); alternatively, sending an online transaction request to the scanning device, i.e., requiring the user using the scanning device to notify the operator to activate an offline payment flow, so as to perform online identity verification on the user.

With the technical solution according to the present application, when the payment code provided by the mobile device is received, whether a risk control operation by the server needs to be re-initiated may be determined based on a result of risk control identification performed by the terminal device on behavioral biometric signatures of the operator comprised in the payment code. It has been proved through experiments that the completion of risk control identification performed by a local risk identification system of the terminal device can save 70% computation resources for the terminal device, which greatly reduces the consumption of risk control resources of the server and improves the risk control efficiency of the entire server.

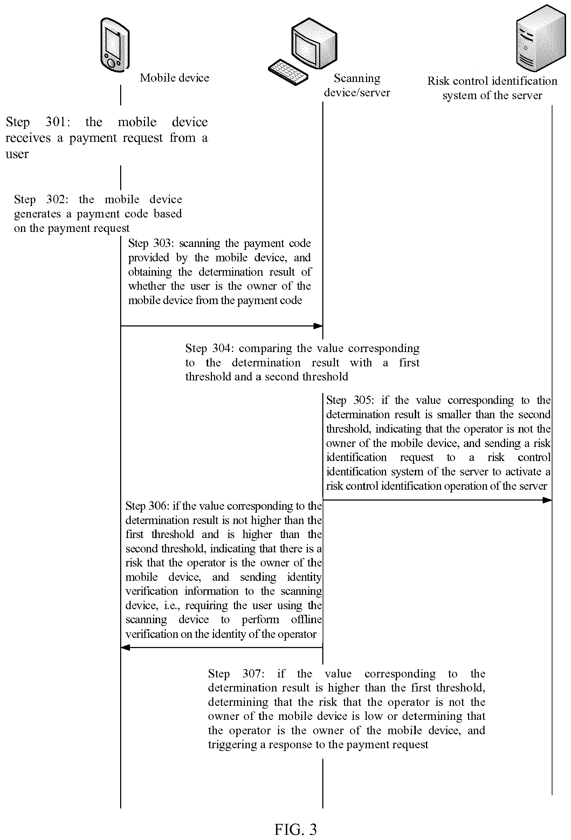

FIG. 3 is a flow chart of a risk control method utilized for performing scan-and-pay in a mobile device according to some embodiments of the present application. The embodiments of the present application will be described in detail with the goal to achieve offline risk control.

Step 301: the mobile device receives a payment request from a user.

The payment request is sent to the mobile device for the user when the user is in an offline state.

When the mobile device receives the payment request, the mobile device determines a behavioral biometric signature of the user collected within a set time range.
Step 302: the mobile device generates a payment code based on the payment request.

Here, the payment code comprises information a payment account used by the user, a behavioral biometric signature of the user, a historical behavioral biometric signature recorded in the mobile device, and a determination result of whether the user is the owner of the mobile device.

Step 303: scanning the payment code provided by the mobile device, and obtaining the determination result of whether the user is the owner of the mobile device from the payment code.

If the determination result is expressed in the form of a percent.

Step 304: comparing the value corresponding to the determination result with a first threshold and a second threshold.

The second threshold and the first threshold in the embodiments of the present application have different values, and the second threshold is smaller than the first threshold.

Step 305: if the value corresponding to the determination result is smaller than the second threshold, indicating that the operator is not the owner of the mobile device, and sending a risk identification request to a risk control identification system of the server to activate a risk control identification operation of the server.

Step 306: if the value corresponding to the determination result is not higher than the first threshold and is higher than the second threshold, indicating that there is a risk that the operator is the owner of the mobile device, and sending identity verification information to the scanning device, i.e., requiring the user using the scanning device to perform offline verification on the identity of the operator.

Step 307: if the value corresponding to the determination result is higher than the first threshold, determining that the risk that the operator is not the owner of the mobile device is low or determining that the operator is the owner of the mobile device, and triggering a response to the payment request.

Therefore, in the manner according to the present application that the information associated with user behavioral biometric signatures is encoded offline into the payment code and whether to initiate risk control scanning at the server based on the information, the consumption of risk control resources of the server can be greatly reduced, the overall time for risk control can be reduced, and user experience can be improved.

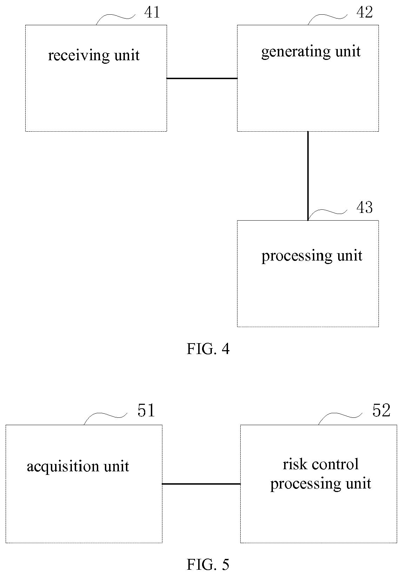

FIG. 4 is a schematic structural diagram of a scan-and-pay device utilized in a mobile device according to some embodiments of the present application. The device comprises: a receiving unit 41 and a generating unit 42, wherein:
the receiving unit 41 is for receiving a payment request of an operator of the mobile device; and
the generating unit 42 is for generating a payment code based on the payment request, wherein the payment code at least comprises the following information:
   first information associated with a payment account and second information associated with a behavioral biometric signature of the operator and a historical behavioral biometric signature recorded in the mobile device.

In some other embodiments of the present application, the second information further comprises:
a determination result of whether the operator is the owner of the mobile device based on comparison of the behavioral biometric signature of the operator and the historical behavioral biometric signature recorded in the mobile device.

In some other embodiments of the present application, the device further comprises: a processing unit 43, wherein:
if the determination result is that the probability that the operator is the owner of the mobile device is lower than a set threshold and it is determined that the mobile device is in an offline payment state, the processing unit 43 triggers an online identity check on the operator of the mobile device.

In some other embodiments of the present application, the generating unit 42 generating a payment code based on the payment request comprises:
based on the payment request, determining first information associated with a payment account and second information associated with the behavioral biometric signature of the operator and the historical behavioral biometric signature recorded in the mobile device; according to a preset mapping relationship between second information and identifier values, determining an identifier value corresponding to the second information comprised in the payment request; and
generating a payment code using the identifier value and the first information, at least one digit in the payment code being used to correspond to the identifier value.

In some other embodiments of the present application, the behavioral biometric signature comprises at least one of a RPC request record, a browsing log, a posture to hold a mobile device, and finger pressing characteristics.

It should be noted that the device in the embodiments of the present application may be implemented in a software manner or a hardware manner, which is not limited in the specification. The device receives a payment request of an operator of the mobile device; and generates a payment code based on the payment request, wherein the payment code at least comprises first information associated with a payment account and second information associated with a behavioral biometric signature of the operator and a historical behavioral biometric signature recorded in the mobile device. This way, an identification result based on behavioral biometric information of the operator is transmitted to the server via the payment code for risk control determination, which enables the entire risk control system to accurately determine risk using data in more dimensions, improve the accuracy of risk control, and thus improve the efficiency of risk control identification.

FIG. 5 is a schematic structural diagram of a risk control device utilized for performing scan-and-pay in a mobile device according to some embodiments of the present application. The risk control device comprises: an obtaining unit 51 and a risk control processing unit 52, wherein:
the obtaining unit 51 is for obtaining a payment code provided by the mobile device, wherein the payment code at least comprises the following information: first information associated with a payment account and second information associated with a behavioral biometric signature of an operator of the mobile device and a historical behavioral biometric signature recorded in the mobile device; and
the risk control processing unit 52 is for determining whether to activate risk control identification of a server based on the second information comprised in the payment code.

In some other embodiments of the present application, the obtaining unit 51 obtaining a payment code provided by the mobile device comprises:
scanning a 2D barcode image provided by the mobile device; and
extracting the first information associated with a payment account and second information associated with the behavioral biometric signature of the operator of the mobile device and the historical behavioral biometric signature recorded in the mobile device comprised in the payment code from the 2D barcode image.

In some other embodiments of the present application, the second information comprises a determination result of whether the operator is the owner of the mobile device based on comparison of the behavioral biometric signature of the operator and the historical behavioral biometric signature recorded in the mobile device; and
the risk control processing unit 52 determining whether to send a risk control request to a server based on the second information comprised in the payment code comprises:
if the determination result comprised in the payment code is that the operator is not the owner of the mobile device, triggering a risk control identification of the server.

In some other embodiments of the present application, the second information comprises a determination result of whether the operator is the owner of the mobile device, determining whether the browsing log is abnormal, and determining whether the Remote Procedure Call Protocol is abnormal based on a comparison of behavioral biometric signatures of the operator and historical behavioral biometric signatures recorded in the mobile device; and
the risk control processing unit 52 determining whether to send a risk control request to a server based on the second information comprised in the payment code comprises:
if the determination result comprised in the payment code is that the probability that the operator is the owner of the mobile device is lower than a set threshold, triggering a risk control identification of the server when the browsing log is determined to be abnormal and/or the RPC request records are determined to be abnormal.

It should be noted that the risk control device in the embodiments of the present application may be implemented in a software manner or a hardware manner, which is not limited in the specification. When the risk control device receives the payment code provided by the mobile device, the risk control device may determine whether a risk control operation by the server needs to be re-initiated based on a result of risk control identification performed by the terminal device on behavioral biometric signatures of the operator comprised in the payment code. It has been proved through experiments that the completion of risk control identification performed by a local risk identification system of the terminal device can save 70% computation resources for the terminal device, which greatly reduces the consumption of risk control resources of the server and improves the risk control efficiency of the entire server.

In the 1990s, an improvement to a technology can be obviously differentiated into a hardware improvement (e.g., an improvement to a circuit structure, such as a diode, a transistor, a switch, etc.) or a software improvement (an improvement to a flow of a method). With the technological development, however, many current improvements to method flows may be deemed as direct improvements to hardware circuit structures. Designers almost always obtain a corresponding hardware circuit structure by programming an improved method flow into a hardware circuit. Therefore, it cannot be concluded that an improvement to a method flow cannot be realized with a hardware module. For example, Programmable Logic Device (PLD) (e.g., Field Programmable Gate Array (FPGA)) is such integrated circuit that the integrated circuit's logic functions are determined by a user through programming the device. A designer programs on his/her own to "integrate" a digital system onto one piece of PLD, who does not need to ask a chip manufacturer to design and manufacture a dedicated IC chip. At present, moreover, this type of programming has mostly been implemented through "logic compiler" software, rather than manually manufacturing the IC chips. The logic compiler software is similar to a software compiler used for program development and writing, while a particular programming language must be used for writing source codes prior to compiling, which is referred to as a Hardware Description Language (HDL). There is not just one, but many types of HDL, such as ABEL (Advanced Boolean Expression Language), AHDL (Altera Hardware Description Language), Confluence, CUPL (Cornell University Programming Language), HDCal, JHDL (Java Hardware Description Language), Lava, Lola, MyHDL, PALASM, RHDL (Ruby Hardware Description Language), etc. The most commonly used right now includes VHDL (Very-High-Speed Integrated Circuit Hardware Description Language) and Verilog. One of ordinary skill in the art should also be aware that it would be very easy to obtain a hardware circuit to implement a logic method flow by using the above HDLs to carry out a little bit logic programming on the method flow and program the method flow into an IC.

A controller may be implemented in any proper manner. For example, a controller may be in, for example, a form of a microprocessor or processor, as well as a computer readable medium that stores computer readable program codes (e.g., software or firmware) capable of being executed by the (micro)processor, a logic gate, a switch, an Application Specific Integrated Circuit (ASIC), a programmable logic controller, and an embedded microcontroller. Examples of the controller include, but are not limited to, the following microcontrollers: ARC 625D, Atmel AT91SAM, Microchip PIC18F26K20, and Silicone Labs C8051F320. A memory controller may further be implemented as a part of a control logic of a memory. One of ordinary skill in the art should also be aware that, in addition to that a controller is implemented in a manner of pure computer readable program codes, it is totally feasible to perform logic programming on steps of a method to enable a controller to implement the same functions in a form of a logic gate, a switch, an ASIC, a programmable logic controller, and an embedded microcontroller. Therefore, such controller can be deemed as a hardware part, while devices comprised in the controller and configured to achieve various functions may also be deemed as a structure inside the hardware part. Alternatively, devices configured to achieve various functions may even be deemed as both software modules to implement a method and a structure inside a hardware part.

The system, apparatus, module or unit described in the above embodiments may be implemented by a computer chip or entity, or implemented by a product having a function. A typical implementation device is a computer. In one example, a computer may be, for example, a personal computer, a laptop computer, a cellular phone, a camera phone, a smart phone, a personal digital assistant, a medium player, a navigation device, an email device, a game console, a tablet computer, a wearable device, or a combination of any devices in these devices.

For convenience of description, the above device is divided into various units according to functions for description. Functions of the units may be implemented in one or multiple pieces of software and/or hardware when the present application is implemented.

One of ordinary skill in the art should understand that the embodiments of the present invention may be provided as a method, a system, or a computer program product. Therefore, the present invention may be implemented as a complete hardware embodiment, a complete software embodiment, or an embodiment combing software and hardware. Moreover, the present invention may be in the form of a computer program product implemented on one or more computer usable storage media (including, but not limited to, a magnetic disk memory, CD-ROM, an optical memory, etc.) comprising computer usable program codes.

The present invention is described with reference to flowcharts and/or block diagrams of the method, device (system), and computer program product according to the embodiments of the present invention. It should be understood that a computer program instruction may be used to implement each process and/or block in the flowcharts and/or block diagrams and a combination of processes and/or blocks in the flowcharts and/or block diagrams. These computer program instructions may be provided for a general-purpose computer, a special-purpose computer, an embedded processor, or a processor of other programmable data processing devices to generate a machine, causing the instructions executed by a computer or a processor of other programmable data processing devices to generate a device for implementing a function specified in one or more processes in the flowcharts and/or in one or more blocks in the block diagrams.

These computer program instructions may also be stored in a computer readable memory that can instruct a computer or other programmable data processing devices to work in a particular manner, causing the instructions stored in the computer readable memory to generate a manufactured article that includes an instruction device. The instruction device implements a function specified in one or more processes in the flowcharts and/or in one or more blocks in the block diagrams.

These computer program instructions may also be loaded onto a computer or other programmable data processing devices, causing a series of operational steps to be performed on the computer or other programmable devices, thereby generating computer-implemented processing. Therefore, the instructions executed on the computer or other programmable devices provide steps for implementing a function specified in one or more processes in the flowcharts and/or in one or more blocks in the block diagrams.

In a typical configuration, the computation device includes one or more processors (CPUs), input/output interfaces, network interfaces, and a memory.

The memory may include computer readable media, such as a volatile memory, a Random Access Memory (RAM), and/or a non-volatile memory, e.g., a Read-Only Memory (ROM) or a flash RAM. The memory is an example of a computer readable medium.

Computer readable media include permanent, volatile, mobile, and immobile media, which can implement information storage through any method or technology. The information may be computer readable instructions, data structures, program modules, or other data. Examples of storage media of computers include, but are not limited to, Phase-change Random Access Memories (PRAMs), Static Random Access Memories (SRAMs), Dynamic Random Access Memories (DRAMs), other types of Random Access Memories (RAMs), Read-Only Memories (ROMs), Electrically Erasable Programmable Read-Only Memories (EEPROMs), flash memories or other memory technologies, Compact Disk Read-Only Memories (CD-ROMs), Digital Versatile Discs (DVDs) or other optical memories, cassettes, cassette and disk memories or other magnetic memory devices, or any other non-transmission media, which can be used for storing information accessible to a computation device. According to the definitions in the specification, the computer readable media do not include transitory media, such as modulated data signals and carriers.

It should be further noted that the terms of "including," "comprising," or any other variants of the terms are intended to encompass a non-exclusive inclusion, causing a process, method, commodity, or device comprising a series of elements to not only comprise these elements, but also comprise other elements that are not clearly listed, or further comprise elements that are inherent to the process, method, commodity, or device. When there is no further restriction, elements defined by the statement "comprising one..." does not exclude that a process, method, commodity, or device comprising the above elements further comprises additional identical elements.

One of ordinary skill in the art should understand that the embodiments of the present application may be provided as a method, a system, or a computer program product. Therefore, the present application may be implemented as a complete hardware embodiment, a complete software embodiment, or an embodiment combing software and hardware. Moreover, the present application may be in the form of a computer program product implemented on one or more computer usable storage media (including, but not limited to, a magnetic disk memory, CD-ROM, an optical memory, etc.) comprising computer usable program codes.

The present application may be described in a regular context of a computer executable instruction that is executed by a computer, such as a program module. Generally, the program module comprises a routine, a program, an object, a component, a data structure, etc. for executing a particular task or implementing a particular abstract data type. The present application may also be practiced in distributed computing environments. In these distributed computing environments, remote processing devices connected via communication networks carry out tasks. In the distributed computing environments, a program module may be located in local and remote computer storage media, including storage devices.

The embodiments in this specification are described in a progressive manner with each embodiment focused on differences from other embodiments, and the embodiments may be mutually referenced for identical or similar parts. In particular, the system embodiment is described in a relatively simple manner, as the system embodiment is substantially similar to the method embodiment. The description of the method embodiment may be referenced for the related parts.

The above-described is only embodiments of the present application, which are not used to limit the present application. To one of ordinary skill in the art, the present application may have various modifications and changes. Any modification, equivalent substitution, or improvement made within the spirit and principle of the present application shall be encompassed by the claims of the present application.

## Claims

1. A scan-and-pay method for a mobile device, the method comprising:
receiving a payment request of an operator of the mobile device; and
generating a payment code based on the payment request, wherein the payment code at least comprises the following information:
first information associated with a payment account and second information associated with a behavioral biometric signature of the operator and a historical behavioral biometric signature recorded in the mobile device.

2. The method according to claim 1, wherein the second information comprises:
a determination result of whether the operator is an owner of the mobile device based on a comparison of the behavioral biometric signature of the operator and the historical behavioral biometric signature recorded in the mobile device.

3. The method according to claim 2, wherein the method further comprises:
if the determination result is that a probability that the operator is the owner of the mobile device is lower than a set threshold and it is determined that the mobile device is in an offline payment state, triggering an online identity check on the operator of the mobile device.

4. The method according to claim 1 or 2, wherein generating the payment code based on the payment request comprises:
based on the payment request, determining the first information associated with the payment account and the second information associated with the behavioral biometric signature of the operator and the historical behavioral biometric signature recorded in the mobile device;
according to a preset mapping relationship between second information and identifier values, determining an identifier value corresponding to the second information comprised in the payment request; and
generating the payment code using the identifier value and the first information, with at least one digit in the payment code corresponding to the identifier value.

5. The method according to claim 1, wherein the behavioral biometric signature comprises at least one of a Remote Procedure Call Protocol (RPC) request record, a browsing log, a posture to hold a mobile device, and finger pressing characteristics.

6. A scan-and-pay device for a mobile device, the device comprising:
a receiving unit for receiving a payment request of an operator of the mobile device; and
a generating unit for generating a payment code based on the payment request, wherein the payment code at least comprises the following information:
first information associated with a payment account and second information associated with a behavioral biometric signature of the operator and a historical behavioral biometric signature recorded in the mobile device.

7. The device according to claim 6, wherein the second information further comprises:
a determination result of whether the operator is an owner of the mobile device based on a comparison of the behavioral biometric signature of the operator and the historical behavioral biometric signature recorded in the mobile device.

8. The device according to claim 7, further comprising: a processing unit, wherein
if the determination result is that a probability that the operator is the owner of the mobile device is lower than a set threshold and it is determined that the mobile device is in an offline payment state, the processing unit triggers an online identity check on the operator of the mobile device.

9. The device according to claim 7 or 8, wherein generating unit generating the payment code based on the payment request comprises:
based on the payment request, determining the first information associated with the payment account and the second information associated with the behavioral biometric signature of the operator and the historical behavioral biometric signature recorded in the mobile device;
according to a preset mapping relationship between second information and identifier values, determining an identifier value corresponding to the second information comprised in the payment request; and
generating the payment code using the identifier value and the first information, with at least one digit in the payment code corresponding to the identifier value.

10. A risk control method utilized for performing scan-and-pay in a mobile device, the method comprising:
obtaining a payment code provided by the mobile device, wherein the payment code at least comprises the following information: first information associated with a payment account and second information associated with a behavioral biometric signature of an operator of the mobile device and a historical behavioral biometric signature recorded in the mobile device; and
determining whether to activate a risk control identification of a server based on the second information comprised in the payment code.

11. The risk control method according to claim 10, wherein obtaining the payment code provided by the mobile device comprises:
scanning a two-dimensional (2D) barcode image provided by the mobile device; and
extracting the first information associated with the payment account and the second information associated with the behavioral biometric signature of the operator of the mobile device and the historical behavioral biometric signature recorded in the mobile device comprised in the payment code from the 2D barcode image.

12. The risk control method according to claim 10, wherein the second information comprises a determination result of whether the operator is an owner of the mobile device based on a comparison of the behavioral biometric signature of the operator and the historical behavioral biometric signature recorded in the mobile device; and
determining whether to send the risk control request to the server based on the second information comprised in the payment code comprises:
if the determination result comprised in the payment code is that the operator is not the owner of the mobile device, triggering a risk control identification of the server.

13. A risk control device utilized for performing scan-and-pay in a mobile device, the device comprising:
an obtaining unit for obtaining a payment code provided by the mobile device, wherein the payment code at least comprises the following information: first information associated with a payment account and second information associated with a behavioral biometric signature of an operator of the mobile device and a historical behavioral biometric signature recorded in the mobile device; and
a risk control processing unit for determining whether to activate a risk control identification of a server based on the second information comprised in the payment code.

14. The risk control device according to claim 13, wherein obtaining unit obtaining the payment code provided by the mobile device comprises:
scanning a 2D barcode image provided by the mobile device; and
extracting the first information associated with the payment account and the second information associated with the behavioral biometric signature of the operator of the mobile device and the historical behavioral biometric signature recorded in the mobile device comprised in the payment code from the 2D barcode image.

15. The risk control device according to claim 13, wherein the second information comprises a determination result of whether the operator is an owner of the mobile device based on a comparison of the behavioral biometric signature of the operator and the historical behavioral biometric signature recorded in the mobile device; and
the risk control processing unit determining whether to send the risk control request to the server based on the second information comprised in the payment code comprises:
if the determination result comprised in the payment code is that the operator is not the owner of the mobile device, triggering the risk control identification of the server.

16. The risk control device according to claim 13, wherein the second information comprises a determination result of whether the operator is an owner of the mobile device, determining whether the browsing log is abnormal, and determining whether the Remote Procedure Call Protocol is abnormal based on a comparison of the behavioral biometric signature of the operator and the historical behavioral biometric signature recorded in the mobile device; and
the risk control processing unit determining whether to send the risk control request to the server based on the second information comprised in the payment code comprises:
if the determination result comprised in the payment code is that a probability that the operator is the owner of the mobile device is lower than a set threshold, triggering the risk control identification of the server when the browsing log is determined to be abnormal and/or the RPC request records are determined to be abnormal.
